Europäisches Patentamt

European Patent Office

Office européen des brevets

(11) Veröffentlichungsnummer: **0 208 194 B1**

# EUROPÄISCHE PATENTSCHRIFT

(45) Veröffentlichungstag der Patentschrift:
07.06.89

(51) Int. Cl.⁴: **C09D 3/80, C08L 25/14**

(21) Anmeldenummer: 86108628.8

(22) Anmeldetag: 25.06.86

(54) **Bindemittel für wässrige, physikalisch trocknende Korrosionsschutzanstriche auf Basis einer Phosphorsäure-monoalkylester enthaltenden Polymer-Dispersion.**

(30) Priorität: 29.06.85 DE 3523319

(43) Veröffentlichungstag der Anmeldung:
14.01.87 Patentblatt 87/3

(45) Bekanntmachung des Hinweises auf die Patenterteilung:
07.06.89 Patentblatt 89/23

(84) Benannte Vertragsstaaten:
AT BE CH DE FR GB IT LI NL SE

(56) Entgegenhaltungen:
US-A- 3 554 790
US-A- 3 840 392

(73) Patentinhaber: BASF Aktiengesellschaft,
Carl-Bosch-Strasse 38, D-6700 Ludwigshafen(DE)

(72) Erfinder: Dersch, Rolf, Dr., Albrecht-Dürer-Ring 16,
D-6710 Frankenthal(DE)
Erfinder: Kossmann, Heribert, Windestrasse 30,
D-6700 Ludwigshafen(DE)
Erfinder: Wistuba, Eckehardt, Dr., Im Obergarten 7,
D-6702 Bad Dürkheim(DE)

## Beschreibung

Die vorliegende Erfindung betrifft monoalkylphosphathaltige Polymer-Dispersionen, die als Bindemittel für Korrosionsschutzanstrichmittel eingesetzt werden.

Korrosionsschutzanstriche sind Beschichtungsstoffe, deren korrosionsschützende Wirkung einerseits durch das Bindemittel und andererseits durch die Pigmente bzw. Füllstoffe bestimmt wird.

Umweltfreundliche Korrosionsschutzfarben werden heute verstärkt auf Basis wasserverdünnbarer Bindemittel, wie Alkydharzemulsionen, lösemittelhaltigen Alkydharzen, die nach Neutralisation mit Aminen wasserverdünnbar bzw. wasserlöslich werden, und Polymer-Dispersionen, hergestellt.

Von den wasserverdünnbaren Bindemitteln, die in Korrosionsschutzfarben eingesetzt werden, wird verlangt, daß der Polymerfilm in Wasser nur wenig quillt, und daß die Polymerdispersion stabil gegenüber Metallionen, z.B. Zinkionen, ist, damit aktive Korrosionsschutzpigmente, wie Zinkphosphat, eingesetzt werden können. Weiterhin sollte der Korrosionsschutzanstrich eine gute Haftung auf verschiedenen Metallen, vor allem Eisen und Stahl, aufweisen, kreidungs- und witterungsbeständig sein und das beschichtete Substrat vor Korrosion schützen.

Da wäßrige Alkydharzsysteme weder gegen Metallionen noch gegen Witterungseinflüsse stabil und nicht kreidungsbeständig sind, sind sie für Korrosionsschutzanstriche praktisch nicht zu gebrauchen. Auch wirkt sich das Lösemittel, das in Konzentrationen bis ca. 40 % bezogen auf festes Alkydharz in diesen Bindemittelsystemen enthalten ist, ungünstig auf die Umwelt aus.

Anstrichstoffe auf Basis von Polymer-Dispersionen trocknen schneller als Alkydharzsysteme, sind witterungsstabiler und kreidungsbeständiger, doch läßt ihre Metallionenstabilität in manchen Fällen zu wünschen übrig, zumal viele Polymer-Dispersionen bei Zugabe von aktiven Pigmenten, wie Zinkphosphat, koagulieren, da die Stabilität ihres Emulgatorsysteme nicht ausreichen. Die Güte des Korrosionsschutzes durch Anstrichstoffe auf Basis von Polymer-Dispersionen wird von der Monomerzusammensetzung der Polymerisate und dem Emulgatorsystem der Polymer-Dispersion bestimmt.

Als Emulgatoren haben sich nichtionische Verbindungen, z.B. ethoxilierte Alkylphenole und Fettalkohole sowie anionische Verbindungen, wie Alkylsulfate, sulfatierte Alkylethoxilate und Mono- sowie Diphosphorsäureester bewährt. So werden u.a. Phosphatester-Emulgatoren in der DE-OS 25 33 043 für die Emulsionspolymerisation olefinisch ungesättigter Monomerer beschrieben, durch die die Farbbeständigkeit der aus den Polymer-Dispersionen gebildeten Filme beim Erhitzen verbessert werden soll. In der US-PS 4 104 100 werden polyanionische Phosphatester Emulgatoren für Polymer-Dispersionen für die anodische Elektrotauchlackierung offenbart, die die Abscheidung der Polymerfilme günstig beeinflussen. Schließlich werden in der GB 1 327 030 phosphorhaltige Polymer-Dispersionen beschrieben, die als Bindemittel für niedrig pigmentierte Abziehlacke eingesetzt werden. Diese Abziehlacke müssen leicht von Substrat-Metallen, entfernbar sein, die diese Beschichtungen temporär schützen.

Der vorliegenden Erfindung liegt die Aufgabe zugrunde, eine Polymer-Dispersion zur Verfügung zu stellen, deren Monomerzusammensetzung und Emulgatorsystem so aufeinander abgestimmt sind, daß sie als Bindemittel für wäßrige Korrosionsschutzanstrichmittel geeignet und frei von den oben genannten Nachteilen ist.

Es wurde nun gefunden, daß Styrol-(meth)acrylsäurealkylester-copolymerisat-Dispersionen mit besonderem Vorteil als Bindemittel für korrosionsschützende Anstrichstoffe geeignet sind, wenn sie einen Gehalt von

a) 0,5 bis 4 Gew.% eines Monoalkylphosphats mit einem Phosphorgehalt von mindestens 7 % und

b) 0,1 bis 3,5 Gew.% eines ethoxilierten Alkylphenols mit 8 bis 9 C-Atomen in der Alkylgruppe und/oder eines ethoxilierten $C_8$-$C_{18}$-Fettalkohols

aufweisen, wobei die Angaben in Gew.% auf die Menge an Copolymerisat bezogen ist und die Polymerisate einen mittleren Teilchendurchmesser von 0,01 bis 0,5 μm und eine MFT von 5 bis 50°C haben. Weiterhin können die erfindungsgemäßen Dispersionen Zinksalzlösungen, z.B. von Zinkammoncarbonat und Zinkammoniumpolyacrylat in Zinkionen-Mengen von 0,5 bis 10 Gew.%, vorzugsweise 1 bis 5 Gew.%, bezogen auf die Copolymerisatmenge, enthalten.

Zur Herstellung der erfindungsgemäßen Styrol-(meth)acrylsäureestercopolymerisat-Dispersionen kann Styrol in an sich üblicher Weise mit (Meth)acrylsäurealkylestern insbesondere von $C_4$-$C_{18}$-Alkanolen, wie n-Butanol, iso-Butanol, tert.-Butanol, 2-Ethylhexylalkohol, Laurylalkohol sowie ferner Cyclohexylalkohol, Norbornanol und 4-tert.-Butylcyclohexanol in wäßriger Emulsion in Gegenwart der Monoalkylphosphate (a) und der Ethoxilierungsprodukte (b) unter Einsatz der üblichen radikalbildenden Polymerisationsinitiatoren copolymerisiert werden, wobei die Menge der Monomeren im allgemeinen 35 bis 65 Gew.%, bezogen auf die Summe der Monomeren, der Dispergiermittel und des Wassers, beträgt.

Zusätzlich können die Copolymerisate noch Acrylnitril in Mengen bis zu 30 Gew.%, bezogen auf das Copolymerisat, einpolymerisiert enthalten. Bevorzugt werden Copolymere auf Basis von Styrol und n-Butylacrylat bzw. 2-Ethylhexylacrylat eingesetzt. Vorzugsweise enthalten die Copolymerisate zusätzlich noch 0,2 bis 3 Gew.% 3 bis 5 C-Atome enthaltene Mono- und/oder Dicarbonsäuren und/oder deren Amide, wie Acrylsäure, Methacrylsäure, Fumarsäure, Itaconsäure, Maleinsäure, Acrylamid oder Methacrylamid einpolymerisiert.

Als Komponente (a) werden Monoalkylphosphate mit einem Phosphatgehalt von mindestens 7 Gew.%,

EP 0 208 194 B1

in Mengen von 0,5 bis 4 Gew.%, bevorzugt 0,8 bis 1,8 Gew.%, eingesetzt. Die von Natur aus sauer reagierenden Monoalkylphosphate werden vor ihrem Einsatz mit Basen im allgemeinen mit Ammoniak auf pH 7,5 bis 10,5, bevorzugt pH 8 bis 9, gestellt. Die erfindungsgemäß zu verwendenden Monoalkylphosphate haben lineare 5 bis 24, insbesondere 7 bis 17 C-Atome enthaltende Alkylreste. Auch Gemische verschiedener Monoalkylphosphate können eingesetzt werden. Vorzugsweise sind die Monoalkylphosphate nicht ethoxiliert. Beispiele für geeignete Monoalkylphosphate sind Dodecylphosphat (Phosphorgehalt: 11,6 %), Dodecyletherphosphat mit 2 Mol EO (P-Gehalt: 8,8 %), Dodecyletherphosphat mit 3 Mol EO (P-Gehalt: 7,8 %) und Octadecylphosphat (P-Gehalt: 8,9 %).

Als Komponente (b) werden ethoxilierte Alkylphenole und/oder Fettalkohole verwendet. Die ethoxilierten Alkylphenole haben vorzugsweise normale oder iso-Octyl oder -Nonylgruppen als Alkylreste. Ihr Ethoxilierungsgrad beträgt meist 8 bis 40, vorzugsweise 20 bis 30 Ethylenoxidreste je Molekül. Die ethoxilierten Fettalkohole besitzen 8 bis 18 C-Atome in den Alkoholgruppen. Die Menge der Ethoxylierungsprodukte (b) beträgt 0,1 bis 3,5 Gew.%, bevorzugt 0,3 bis 1,5 Gew.%, bezogen auf die Copolymerisate.

Bei der Herstellung der Styrol-(meth)acrylsäurealkylester-Copolymerisat-Dispersionen nach den üblichen Emulsionspolymerisationsverfahren können insbesondere wasserlösliche Polymerisationsinitiatoren, wie Ammoniumperoxiddisulfat, Kaliumperoxiddisulfat und Natriumperoxiddisulfat eingesetzt werden. Verwendet man Redoxkatalysatoren, so kann auch Kaliumperoxiddiphosphat als Oxidationskomponente eingesetzt werden, neben den üblichen Reduktionskomponenten, wie Ascorbinsäure, Natriumformaldehydsulfoxilat und Natriumbisulfit.

Die Polymerisationstemperatur kann in weiterem Bereich variiert werden. Im allgemeinen arbeitet man bei Temperaturen von 65 bis 95°C. Die Gesamtmenge der Monomeren beträgt vorzugsweise 45 bis 60 Gew.%, bezogen auf die Gesamtmenge von Monomeren, Dispergierhilfsmittel und Wasser. Die Dispersionen weisen meist Lichtduchlässigkeitswerte (LD-Werte; gemessen an der auf 0,01 Gew.% verdünnten Dispersion) von 40 bis 90, vorzugsweise von 50 bis 80 %, und eine minimale Filmbildetemperatur (= MFT) von 5 bis 50°C, vorzugsweise von 12 bis 25°C, auf. Meist beträgt ihr pH-Wert 6 bis 9,5, vorzugsweise 7 bis 8,5. Er kann durch Zugabe von z.B. Ammoniak eingestellt sein.

Die erfindungsgemäßen Polymerdispersionen können mit besonderem Vorteil als Bindemittel zur Herstellung von Korrosionsschutzanstrichen für Eisen und Stahl angewandt werden. Die Pigmentierung kann z.B. mit Aktivpigmenten, wie Zinkphosphat und Zinkborat, die in Mengen von meist 3 bis 25 %, bezogen auf Gesamtrezept eingesetzt werden, erfolgen.

Als Füllstoffe eignen sich z.B. Calcite, Dolomite, Schwerspat, Talkum und Glimmer, die im allgemeinen in Mengen von 1,5 bis 40 Gew.%, bezogen auf Gesamtrezept mitverwendet werden können.

Zur Filmbildung können übliche Filmbildehilfsmittel, wie Glykolether, Glykoletheracetate, aromatenhaltige Testbenzine und Derivate des Propylenoxids mit meist 1 bis 4 C-Atome enthaltenden Alkanolen in Mengen von im allgemeinen 1 bis 5 Gew.% mitverwendet werden.

Weitere Hilfsmittel, die den Korrosionsschutzfarben zugesetzt werden können, sind z.B. Verdicker, z.B. auf Urethanbasis und Entschäumer, beispielsweise auf Basis von Mineralölen oder Siliconen.

Die Herstellung der Korrosionsschutzanstrichmittel kann nach den üblichen Methoden erfolgen. Die Korrosionsschutzanstrichmittel können durch Spritzen, Streichen, Rollen, Tauchen oder Fluten auf die Untergründe, z.B. auf metallische Untergründe, insbesondere aus Eisen oder Stahl, aufgebracht werden.

Die in den folgenden Beispielen angegebenen Teile und Prozente beziehen sich auf das Gewicht.

Herstellung der Polymerdispersionen

Beispiel 1

In einem Polymerisationsgefäß mit Rührer, Rückflußkühler, Thermometer und 2 Zulaufgefäßen wird eine Mischung aus 400 Teilen Wasser, 25 Teilen 20 %iger wäßriger Lösung von mit 25 Mol ethoxiliertem p-Isooctylphenol, 7,25 Teilen 20,8 %iger wäßriger Lösung eines Mono-Phosphorsäureesters eines linearen Fettalkohols, der 10,9 Gew.% organisch gebundenen Phosphor enthält und vor der Zugabe mit Ammoniak neutralisiert wurde, vorgelegt. Für die Zuläufe werden folgende Mischungen bereitgestellt:

Zulauf I:
358 Teile Wasser,
64,8 Teile einer 20,8 %igen wäßrigen Lösung des Monophosphorsäureesters,
26 Teile Acrylsäure,
16 Teile 50 %ige Acrylamid-Lösung,
8 Teile Methacrylamid,
300 Teile Styrol,
400 Teile 2-Ethylhexylacrylat,
300 Teile Methylmethacrylat
Zulauf II:
160 Teile Wasser
4,1 Teile Kaliumpersulfat.

Zulauf III:
1 Teil tert.-Butylhydroperoxid,
15 Teile 20 %ige wäßrige Lösung eines mit 25 Mol ethoxilierten p-Isooctylphenols.
Zulauf IV:
0,6 Teile Formaldehydsulfoxilat (Na-Salz)
10 Teile Wasser.

Die Vorlage wird unter Rühren erwärmt. Bei 85°C gibt man 10 % von Zulauf II in die Vorlage. Nach 2 bis 3 Minuten werden Zulauf I innerhalb von 3 Stunden und parallel Zulauf II innerhalb von 3,5 Stunden gleichmäßig zudosiert. Nach Beendigung von Zulauf II wird noch 1,5 Stunden bei 85°C gerührt und anschließend gekühlt. Bei 30°C Innentemperatur werden zuerst Zulauf III, dann Zulauf IV zugegeben und noch 30 Minuten nachgerührt. Durch Zugabe von 25 %igem wäßrigen Ammoniak wird der pH-Wert dann auf 8 bis 8,5 gestellt. Man erhält eine 50 %ige wäßrige Dispersion eines LD-Wertes von 64 % und einer MFT von 23°C.

Beispiel 2

Man arbeitet wie in Beispiel 1 angegeben, nur wird Zulauf I, wie folgt geändert:
385 Teile Wasser
64,8 Teile 20,8 %ige wäßrige Lösung des in Beispiel 1 angegebenen Monophosphorsäureesters (Phosphorgehalt: 10,9 %, mit Ammoniak neutralisiert)
26 Teile Acrylsäure
16 Teile einer 50 %igen Acrylamid-Lösung
8 Teile Methacrylamid
710 Teile n-Butylmethacrylat
220 Teile 2-Ethylhexylacrylat
70 Teile Styrol
Man erhält eine 50 %ige wäßrige Dispersion des LD-Werts 78 und der MFT 17°C.

Beispiel 3

Man arbeitet wie in Beispiel 1 angegeben, ändert aber Zulauf I wie folgt:
358 Teile Wasser
64,8 Teile 20,8 %ige wäßrige Lösung des in Beispiel 1 angegebenen Monophosphorsäureesters (Phosphorgehalt: 10,9 %, mit Ammoniak neutralisiert)
26 Teile Acrylsäure
16 Teile 50 %ige Acrylamid-Lösung
8 Teile Methacrylamid
540 Teile Styrol
460 Teile 2-Ethylhexylacrylat
Man erhält eine 50 %ige wäßrige Dispersion in die 1,35 Gew.% Zinkammoncarbonat eingerührt werden. Der LD-Wert der Dispersion beträgt 64 %, die MFT 17°C.

Vergleichsbeispiele

Dispersion 4

Vorlage:
400 Teile Wasser, 25 Teile einer 20 %igen Lösung eines mit 25 Mol ethoxilierten p-Isooctylphenols und 5 Teile 30 %ige wäßrige Natriumlauryletherphosphatlösung (organisch gebundener Phosphor: 3,8 Gew.%).
Zulauf I:
380 Teile Wasser
45 Teile 30 %ige wäßrige Natriumlauryletherphosphatlösung (org. geb. Phosphor: 3,8 Gew.%)
26 Teile Acrylsäure
16 Teile 50 %ige Acrylamid-Lösung
8 Teile Methacrylamid
540 Teile Styrol
460 Teile 2-Ethylhexylacrylat
Man arbeitet im übrigen wie in Beispiel 1 angegeben und erhält eine 50 %ige wäßrige Dispersion des LD-Werts 84 % und der MFT 13°C.

Dispersion 5

Vorlage:
400 Teile Wasser, 25 Teile 20 %ige wäßrige Lösung eines mit 25 Mol ethoxilierten p-Isooctylphenols und 1,7 Teile 35 %ige Lösung eines sulfatisierten ethoxilierten p-iso-Octylphenols (Ethoxilierungsgrad 20).
Zulauf I:
388 Teile Wasser
41,1 Teile 35 %ige wäßrige Lösung des sulfatierten ethoxilierten p-iso-Octylphenols
26 Teile Acrylsäure
16 Teile 50 %ige Acrylamid-Lösung
8 Teile Methacrylamid
500 Teile Styrol
500 Teile Butylacrylat
Man arbeitet im übrigen wie in Beispiel 1 angegeben und erhält eine 50 %ige wäßrige Dispersion des LD-Werts 88 % und der MFT 20°C.

Herstellung von Korrosionsschutzfarben (Grundierung)

Die in der Rezeptur angegebenen Bestandteile werden in der aufgeführten Reihenfolge unter Rühren gemischt:

| | |
|---|---|
| Wasser | 36 Teile |
| Natriumbenzoat | 4 Teile |
| Ammoniumsalz einer Polyacrylsäure | 1 Teil |
| Butylglykol | 10 Teile |
| Mikronisiertes Zinkphosphat | 67 Teile |
| Zinksalz der 5-Nitroisophthalsäure (Korrosions-Inhibitor) | 7 Teile |
| Polymerdispersion (Beispiel 1 bzw. 2 bzw. 3) | 131 Teile |
| Titandioxid Rutil | 51 Teile |
| Chromoxidgrün | 40 Teile |
| Polymerdispersion (Beispiel 1 bzw. 2 bzw. 3) | 51 Teile |
| Calcit 5 µm | 65 Teile |
| Testbenzin 140 bis 210°C | 10 Teile |
| Polymerdispersion (Beispiel 1 bzw. 2 bzw. 3) | 520 Teile |
| Entschäumer (Gemisch aus Mineralöl, Fettseifen, Alkoholen und Emulgatoren) | 5 Teile |
| | 998 Teile |

PVK: etwa 17%
Viskosität, Rheomat 15, C 13: 500 mPa . s

PVK: etwa 17 %
Viskosität, Rheomat 15, C 13: 500 mPa.s
Die Korrosionsschutzfarben (1), (2) und (3) werden derart auf entfettete blanke Tiefziehbleche aufgezogen, daß nach der Trocknung bei Raumtemperatur (3 Tage) eine Trockenschicht von 50 µm bzw. 80 µm erhalten wird.
Nach der gleichen Rezeptur werden zum Vergleich Korrosionsschutzfarben unter Einsatz der Dispersionen (4) und (5) als Bindemittel hergestellt und auf Tiefziehbleche aufgezogen.
Die Prüfdaten sind in der folgenden Tabelle zusammengefaßt:

Tabelle: Prüfdaten

| Prüfung | Schwitzwassertest nach DIN 50017 | Salzsprühtest nach DIN 50021 | Unterrostung am Schnitt |
|---|---|---|---|
| Beispiel 1 | | | |
| Trockenschichtdicke | | | |
| 50 μm | 40 Tage i. O. | 120 Std. i. O. | 1 mm |
| 80 μm | | 240 Std. i. O. | 1–2 mm |
| Beispiel 2 | | | |
| Trockenschichtdicke | | | |
| 50 μm | 40 Tage i. O. | 120 Std. i. O. | 1–2 mm |
| 80 μm | | 240 Std. i. O. | 1–2 mm |
| Beispiel 3 | | | |
| Trockenschichtdicke | | | |
| 50 μm | 40 Tage i. O. | 120 Std. i. O. | 1 mm |
| 80 μm | | 240 Std. i. O. | 1 mm |
| Vergleichsversuch Dispersion 4 | | | |
| Trockenschichtdicke | | | |
| 50 μm | 40 Tage i. O. | 120 Std. i. O. | 6 mm |
| 80 μm | | 240 Std. i. O. | 8 mm |
| Vergleichsversuch Dispersion 5 | | | |
| Trockenschichtdicke | | | |
| 50 μm | 40 Tage i. O. | 120 Std. i. O. | 10 mm |
| 80 μm | | 240 Std. i. O. | 10 mm |

## Patentansprüche

1. Bindemittel für wäßrige Korrosionsschutzanstriche auf Basis von Styrol-(meth)acrylsäurealkylester-copolymerisat-Dispersionen, gekennzeichnet durch einen Gehalt an

a) 0,5 bis 4 Gew.% eines Monoalkylphosphats mit einem Phosphorgehalt von mindestens 7 % und

b) 0,1 bis 3,5 Gew.% eines ethoxilierten Alkylphenols, mit 8 bis 9 C-Atomen in der Alkylgruppe und/oder eines ethoxilierten $C_8$-bis $C_{18}$-Fettalkohols,

wobei die Angaben in Gew.% auf die Copolymerisatmenge bezogen sind und die Copolymerisate einen mittleren Teilchendurchmesser von 0,01 bis 0,5 μm und eine MFT von 5 bis 50°C haben.

2. Bindemittel nach Anspruch 1, gekennzeichnet durch einen zusätzlichen Gehalt von 0,5 bis 10 Gew.%, bezogen auf die Copolymerisatmenge, eines Zinkammonsalzes.

## Claims

1. A binder for aqueous anticorrosion paints based on styrene/alkyl (meth)acrylate copolymer dispersions, which contains

a) from 0.5 to 4% by weight of a monoalkyl phosphate having a phosphorus content of less than 7% and

b) from 0.1 to 3.5% by weight of an oxyethylated alkylphenol, where alkyl is of 8 or 9 carbon atoms, and/or of an oxyethylated $C_8$–$C_{18}$-fatty alcohol, the weight percentages being based on the amount of copolymer, and the copolymers having an average particle diameter of from 0.01 to 0.5 μm and a minimum film forming temperature of from 5 to 50°C.

2. A binder as claimed in claim 1, which additionally contains from 0.5 to 10% by weight, based on the amount of copolymer, of a zinc ammonium salt.

## Revendications

1. Liant pour peintures aqueuses anti-corrosion à base de dispersions de copolymères de styrène et de (méth)acrylate d'alkyle, caractérisé en ce qu'il contient:

a) 0,5 à 4% en poids d'un phosphate mono-alkylique avec une teneur en phosphore d'au moins 7% et

b) 0,1 à 3,5% en poids d'un alkyl-phénol éthoxylé à radical alkyle en $C_8$ ou $C_9$ et(ou) d'un alcool gras en $C_8$ à $C_{18}$ éthoxylé,

les pourcentages en poids se rapportant au poids du copolymère et les copolymères possèdent une granulométrie moyenne de 0,01 à 0,5 μm et une température de fusion (MFT) comprise entre 5 et 50°C.

2. Liant suivant la revendication 1, caractérisé en ce qu'il contient en outre 0,5 à 10% du poids du copolymère d'un sel d'ammonium-zinc.